# EUROPÄISCHE PATENTSCHRIFT

(11) **EP 4 257 412 B1**
(45) Veröffentlichungstag und Bekanntmachung des Hinweises auf die Patenterteilung: **29.10.2025**
(21) Anmeldenummer: 22305484.2
(22) Anmeldetag: 07.04.2022
(51) Int. Cl.: B60L 9/00, B60L 3/00, B60L 5/10, B60L 3/04, B60M 1/00, B60M 7/00, G01M 17/08, G01R 19/165, H02H 1/00, H02H 3/08, B60L 3/12

(54) **VERFAHREN ZUR DETEKTION EINER ABSENKUNG EINES STROMABNEHMERS EINES FAHRZEUGS**
METHOD FOR DETECTING A DROP IN A CURRENT COLLECTOR OF A VEHICLE
PROCÉDÉ DE DÉTECTION D'UN ABAISSEMENT D'UN COLLECTEUR DE COURANT D'UN VÉHICULE

(43) Veröffentlichungstag der Anmeldung: 11.10.2023
(73) Patentinhaber: ALSTOM Holdings, 93400 Saint-Ouen-sur-Seine (FR)
(72) Erfinder: Miels, Torsten, 13127 Berlin (DE); Pust, Rico, 15712 Senzig (DE)
(74) Vertreter: Brunotte, Joachim Wilhelm Eberhard

(56) Entgegenhaltungen:
- EP-A1- 2 275 300
- EP-A1- 2 955 846
- EP-A2- 2 644 432
- DE-A1- 102017 215 135
- US-A1- 2014 042 279
- US-A1- 2018 312 064
- US-B1- 6 321 170

## Beschreibung

Die Erfindung betrifft ein Verfahren und eine Vorrichtung zur Detektion einer Absenkung eines Stromabnehmers eines Fahrzeugs, insbesondere eines Schienenfahrzeugs, und ein Fahrzeug mit der Vorrichtung.

Im Fahrbetrieb und/oder während einer Standzeit von Fahrzeugen mit einem Stromabnehmer kann es zu einer Absenkung des Stromabnehmers von einer Fahrleitung kommen, sodass sich zwischen dem Stromabnehmer und der Fahrleitung ein Abstand ausbildet. Genauer gesagt kann es sich insbesondere um die Absenkung eines Schleifelements (zum Beispiel einer Schleifleiste) des Stromabnehmers, das im Regelfalle an der Fahrleitung entlang gleiten soll, von der Fahrleitung handeln. Der Abstand kann wenige Millimeter oder Zentimeter betragen.

Eine Ursache für die Absenkung kann zum Beispiel eine Schneelast oder Eislast sein. Eine solche Last kann sich zum Beispiel langsam und kontinuierlich, zum Beispiel während eines Schneefalls oder eine Kälteperiode, bilden. Eine weitere Ursache kann zum Beispiel ein Druckabfall eines Haltesystems, zum Beispiel eines Hydraulik- oder Pneumatiksystems, sein, das den Stromabnehmer (insbesondere dessen Schleifelement) in einer zur Stromabnahme geeigneten Position halten soll. Grund hierfür kann ein technischer Defekt sein. Weitere Ursachen für die Absenkung sind ebenfalls möglich, zum Beispiel Verformungen eines Gestänges des Stromabnehmers durch Temperatur- und/oder Zeiteinfluss. Der Stromabnehmer kann zum Beispiel ein Pantograph sein.

Wenn ein Kontaktabbruch zwischen dem Stromabnehmer (genauer, zwischen dem Schleifelement des Stromabnehmers) und der Fahrleitung besteht, bildet sich üblicherweise ein Lichtbogen. Ein Lichtbogen kann beteiligte Bauelemente, insbesondere die Fahrleitung und den Stromabnehmer und dessen Schleifelement, beschädigen. Es kann sogar zu einem Fahrleitungsabriss kommen, der ein gefährliches Ereignis darstellt. Beschädigungen und ein Fahrleitungsabriss können insbesondere dann auftreten, wenn sich das Fahrzeug im Stillstand befindet. Ursächlich für Beschädigungen sind insbesondere hohe Temperaturen an Lichtbogenfußpunkten, das heißt, an Materialbereichen, an denen der Lichtbogen entspringt oder aufgenommen wird. Ein Fahrleitungsabriss kann im Stillstand bereits nach wenigen Minuten auftreten. Es kann verschiedene Gründe geben, weshalb es allgemein wünschenswert ist, dass der Stromabnehmer auch im Stillstand des Fahrzeugs Kontakt mit der Fahrleitung hat. Zum Beispiel kann eine Ladungserhaltung einer Batterie des Fahrzeugs gewünscht sein oder können eine Heizung, eine Klimaanlage oder weitere Verbraucher des Fahrzeugs elektrische Energie auch beim Stillstand benötigen. So kann es sinnvoll sein, sowohl bei kürzerem Stillstand (zum Beispiel bei einem Bahnhofsaufenthalt) oder bei längerem Stillstand (zum Beispiel über mehrere Stunden oder Tage) den Stromabnehmer nicht abzusenken.

Es ist bekannt, bei Schneefall den Stromabnehmer von vornherein zu senken, wenn das Fahrzeug abgestellt wird. Dieses Verfahren erfordert ein erneutes Heben des Stromabnehmers, zum Beispiel, wenn eine Fahrt fortgesetzt werden soll.

Es ist bekannt, bei Fahrzeugen mit zwei systemkompatiblen Stromabnehmern den zweiten Stromabnehmer zu heben, wenn der erste Stromabnehmer abgesenkt wird, also einen Wechsel von Stromabnehmern zu vollziehen. Dieses Verfahren kann bei Fahrzeugen mit nur einem systemkompatiblen Stromabnehmer nicht angewandt werden.

US 2018/312064 A1 beschreibt eine Vorrichtung zur Überwachung eines aufgenommenen Stroms, die eine Stromwert-Ermittlungseinheit umfasst. Die Stromwert-Ermittlungseinheit ist so konfiguriert, dass sie einen Stromwert des Stroms, der durch einen ersten Stromkollektor fließt, und einen Stromwert des Stroms, der durch einen zweiten Stromkollektor fließt, ermittelt. Ein Kontaktverlust verursacht wahrscheinlich einen Lichtbogen und beschädigt den Stromkollektor. Daher wird es als notwendig bezeichnet, den Kontaktverlust zu erkennen. Das Dokument bezieht sich insbesondere auf Schienenfahrzeuge.

DE 10 2017 215135 A1 beschreibt ein Verfahren zur Überprüfung einer Kontaktierung zwischen einem Stromabnehmer und einem Fahrdraht einer Oberleitung, wobei der Stromabnehmer an einem elektromotorisch angetriebenen Kraftfahrzeug angeordnet ist. Der Stromabnehmer weist zwei quer zur Fahrtrichtung orientierte Kontaktbereiche auf, die in Fahrtrichtung hintereinander angeordnet sind und an denen jeweils ein Endkontaktelement angeordnet ist. Ein gleichendseitig angeordnetes Paar der Endkontaktelemente ist mit einer Messvorrichtung verbunden und es wird mittels der Messvorrichtung eine elektrische Zustandsgröße erfasst. In Abhängigkeit der erfassten Zustandsgröße wird ermittelt, ob das Paar der Endkontaktelemente mit der Oberleitung kontaktiert ist.

US 6 321 170 B1 offenbart ein Verfahren zur Bildung von Ausgangssignalen eines Störstromwächters oder eines Zustandswächters eines elektrischen Schienenfahrzeugs, wobei über einen Stromabnehmer Strom aus einem Stromnetz entnommen wird. Der Zustandswächter erkennt neben Störströmen auch weitere Fehlerzustände. Das Verfahren umfasst: a) Erfassen des über den Stromabnehmer fließenden Fahrzeugstroms durch Messen und Digitalisieren, und b) digitale Verarbeitung des erfassten Fahrzeugstroms mit Bestimmung der Spektraldichte von Störströmen.

EP 2 644 432 A1 betrifft ein nicht schienengebundenes Fahrzeug, insbesondere einen Lastkraftwagen oder Bus, mit einem Stromabnehmer zur Einspeisung elektrischer Energie aus einer entlang einer Fahrspur angeordneten, zweipoligen Oberleitungsanlage mit als Hin-und Rückleiter ausgebildeten Fahrdrähten. Dabei weist der Stromabnehmer je Fahrdraht mindestens eine Schleifleiste mit einem Arbeitsbereich zur Kontaktierung der Fahrdrähte auf. Das Fahrzeug umfasst ferner Erfassungsmittel zur Erfassung der Relativlage des Stromabnehmers zu den Fahrdrähten.

EP 2 275 300 A1 beschreibt in Bezug auf ein elektrisches Eisenbahnsystem, dass eine elektrische Stromversorgungseinrichtung Wagen eines Zuges mit Strom versorgt. Ferner wird in dem Dokument beschrieben, dass ein abnormaler Kontakt eines Stromabnehmers des Zuges zu einer Oberleitung der Stromversorgungseinrichtung unter Berücksichtigung der Änderungsrate der elektrischen Spannung des Stromabnehmers bestimmt werden kann.

Es ist Aufgabe der vorliegenden Erfindung, eine Absenkung eines Stromabnehmers eines Fahrzeugs von einer Fahrleitung auf technisch einfache Art und Weise zu detektieren. Es ist eine weitere Aufgabe, eine einfache Voraussetzung dafür zu schaffen, Gefahren und Beschädigungen beteiligter Bauteile durch Lichtbögen zwischen der Fahrleitung und dem Stromabnehmer zu vermeiden. Mithin ist es eine Aufgabe, die Betriebssicherheit des Fahrzeugs zu erhöhen. Zudem ist es eine Aufgabe, Komponenten des Fahrzeugs (zum Beispiel des Primärstromkreises) zu schützen.

Gemäß einem Grundgedanken der vorliegenden Erfindung wird mithilfe von Werten der elektrischen Stromstärke eines elektrischen Stroms, der zwischen einer Fahrleitung und einem Stromabnehmer eines Fahrzeugs übertragen wird oder fließt, eine Absenkung des Stromabnehmers erkannt. Hierbei werden Werte eines Stromanteils, insbesondere eines Gleichstromanteil oder eines Wechselstromanteil, dessen Frequenz unterhalb einer vordefinierten Frequenz liegt, ermittelt. Eine Ermittlung kann insbesondere mithilfe eines (zum Beispiel hardware- oder softwarebasierten) Tiefpassfilters erfolgen. Der elektrische Strom, der zwischen einer Fahrleitung und einem Stromabnehmer eines Fahrzeugs übertragen wird oder fließt, kann insbesondere ein Wechselstrom sein oder einen Wechselstromanteil aufweisen. Insbesondere kann er im Normalzustand (ohne Absenkung oder Lichtbogenbildung) ein Wechselstrom sein. Im Falle der Absenkung kann er ein Wechselstrom sein, der von dem Stromanteil (der insbesondere ein Gleichstromanteil oder ein Wechselstromanteil mit geringerer Frequenz sein kann) überlagert ist.

Der Erfindung liegt unter anderem die Erkenntnis zugrunde, dass der elektrische Strom bei einer Absenkung des Stromabnehmers üblicherweise einen Lichtbogen, insbesondere einen instabilen Lichtbogen, ausbildet. Insbesondere in einem Augenblick, in dem der Wert der elektrischen Stromstärke des elektrischen Stroms (bei wechselnden Werten der elektrischen Stromstärke aufgrund von Wechselstrom) gering ist, kann ein solcher instabiler Lichtbogen kurz entstehen. "Instabil" heißt, dass der Lichtbogen zeitlich fortlaufend zündet und wieder verlöscht. Ein Zünden und Verlöschen kann zum Beispiel innerhalb von Millisekunden oder Zehnfachen oder Hundertfachen von Millisekunden erfolgen.

Ein fortlaufendes Verlöschen und Zünden des instabilen Lichtbogens führt zu Lücken in einem zeitlichen Verlauf der Werte der elektrischen Stromstärke des elektrischen Stroms.

Der Erfindung liegt weiterhin die Erkenntnis zugrunde, dass das fortlaufende Verlöschen und Zünden des instabilen Lichtbogens sich in den Werten der elektrischen Stromstärke des elektrischen Stroms als zusätzlicher niederfrequenter Stromanteil oder als Gleichstromanteil äußert, wenn die Werte der elektrischen Stromstärke in einem zeitlichen Verlauf betrachtet werden.

Der Erfindung liegt weiterhin die Erkenntnis zugrunde, dass ein instabiler Lichtbogen insbesondere bei einer Absenkung des Stromabnehmers ausgebildet wird, wenn der Stromabnehmer und das Schleifelement durch Schnee oder Eis belegt und beschwert sind und/oder in der Umgebung des Lichtbogens Temperaturen unterhalb des Gefrierpunkts (null Grad Celsius) herrschen. Das Verfahren kann daher insbesondere durchgeführt werden, wenn die Umgebungstemperatur unterhalb des Gefrierpunkts liegt oder wenn ein Schneebefall oder ein Eisbefall des Stromabnehmers vorliegt.

Der Erfindung liegt weiterhin die Erkenntnis zugrunde, dass ein instabiler Lichtbogen insbesondere ausgebildet wird, wenn das Fahrzeug sich im Stillstand befindet.

### Insbesondere wird vorgeschlagen ein

Verfahren zur Detektion einer Absenkung eines Stromabnehmers eines Fahrzeugs, insbesondere eines Schienenfahrzeugs, von einer Fahrleitung, aufweisend:
- Ermitteln von Werten der elektrischen Stromstärke eines elektrischen Stroms, der zwischen der Fahrleitung und dem Stromabnehmer in einem Messzeitraum übertragen wird oder fließt;
- Ermitteln von Werten eines Stromanteils des elektrischen Stroms mithilfe der Werte der elektrischen Stromstärke;
- Detektion der Absenkung mithilfe der Werte des Stromanteils und eines vordefinierten Kriteriums.

Das Schienenfahrzeug kann zum Beispiel ein Triebwagen oder ein antriebsloser Wagen sein, zum Beispiel eines Hochgeschwindigkeitszugs, eines Schnellzugs, eines Regionalzugs, einer Stadtbahn, einer Straßenbahn oder einer Untergrundbahn. Die Absenkung des Stromabnehmers von der Fahrleitung kann insbesondere eine Absenkung eines Schleifelements (zum Beispiel einer Schleifleiste) des Stromabnehmers bedeuten und/oder eine Absenkung mindestens eines Teils des Stromabnehmers (zum Beispiel eines Teils, an dem ein Schleifelement oder eine Schleifleiste angebracht ist) bedeuten. Auch andere, z. B. nicht schienengebundene Fahrzeuge sind möglich, zum Beispiel ein Oberleitungslastkraftwagen.

Das Ermitteln von Werten der elektrischen Stromstärke (die Einheit kann Ampere sein) kann insbesondere mithilfe einer Ermittlungseinrichtung erfolgen. Die Ermittlungseinrichtung kann eine Strommesseinrichtung aufweisen oder mit einer Strommesseinrichtung verbunden sein.

Die Strommesseinrichtung kann zum Beispiel ein Amperemeter sein. Die Ermittlungseinrichtung kann zum Beispiel an einem Primärstromkreis des Fahrzeugs angebracht sein oder mit einem Primärstromkreis des Fahrzeugs verbunden sein. Eine Messung von Werten der elektrischen Stromstärke mithilfe der Strommesseinrichtung kann unmittelbar am Stromabnehmer oder an einem Schleifelement des Stromabnehmers erfolgen oder an einem elektrisch verbundenen Bauteil, zum Beispiel einer angeschlossenen Stromleitung des Schienenfahrzeugs, insbesondere des Primärstromkreises des Schienenfahrzeugs.

Die Ermittlungseinrichtung kann eine Recheneinrichtung aufweisen, zum Beispiel einen Computer oder ein Steuergerät, der/das insbesondere ein Eingabegerät (z. B. eine Eingangsschnittstelle, z. B. von der Strommesseinrichtung), ein Ausgabegerät (z. B. eine Ausgangsschnittstelle oder eine Anzeige, zum Beispiel einen Monitor), einen festen Speicher, einen Arbeitsspeicher und/oder einen Prozessor aufweisen kann.

Das erfindungsgemäße Verfahren kann automatisch, insbesondere zum Beispiel unter Nutzung der genannten Recheneinrichtung oder einer anderen Recheneinrichtung und/oder einer sonstigen Steuereinrichtung, erfolgen. Das Ermitteln von Werten der elektrischen Stromstärke und ggf. weitere Schritte des Verfahrens (ggf. alle weitere Schritte) kann/können, zum Beispiel während eines Betriebs oder während einer Standzeit des Fahrzeugs, zum Beispiel ständig oder in regelmäßigen oder unregelmäßigen Abständen, durchgeführt werden. Die Durchführung des erfindungsgemäßen Verfahrens kann auch durch einen menschlichen Nutzer (zum Beispiel durch einen Zugführer oder einen sonstigen Bediensteten) veranlasst werden, zum Beispiel mithilfe eines Knopfes.

Der Messzeitraum kann vordefiniert sein. Der Messzeitraum kann zum Beispiel mindestens 100 oder 200 oder 500 Millisekunden oder 1 oder 2 Sekunden und/oder maximal 200 oder 500 oder 1 oder 2 oder 5 Sekunden betragen. Andere untere oder obere Grenzen sind möglich.

Der elektrische Strom kann insbesondere Wechselstrom sein oder Wechselstromanteile aufweisen. Insbesondere kann der elektrische Strom in dem Falle, wenn ein normaler Kontakt zwischen der Fahrleitung und dem Stromabnehmer besteht, ein Wechselstrom sein oder einen Wechselstromanteil aufweisen. Ein Übertragen oder Fließen des elektrischen Stroms kann insbesondere bedeuten, dass ein Lichtbogen Ladungsträger überträgt oder ein Fluss von Ladungsträgern zwischen der Fahrleitung und dem Stromabnehmer auftritt, wenn die Fahrleitung und der Stromabnehmer in Kontakt sind. Es ist denkbar, dass im Messzeitraum sowohl ein Übertragen von Ladungsträgern durch den Lichtbogen auftritt als auch ein Fluss von Ladungsträgern auftritt bei Kontakt zwischen der Fahrleitung und dem Stromabnehmer.

Das Ermitteln der Werte des Stromanteils (die Einheit kann Ampere sein) kann insbesondere mithilfe der Ermittlungseinrichtung oder einer weiteren Ermittlungseinrichtung, die mit der Ermittlungseinrichtung verbunden sein kann oder Teil der Ermittlungseinrichtung selbst sein kann, erfolgen. Die weitere Ermittlungseinrichtung kann eine Recheneinrichtung aufweisen, zum Beispiel einen Computer oder ein Steuergerät, der/das insbesondere ein Eingabegerät (z. B. eine Eingangsschnittstelle, z. B. von der Strommesseinrichtung), ein Ausgabegerät (z. B. eine Ausgangsschnittstelle oder eine Anzeige, z. B. einen Monitor), einen festen Speicher, einen Arbeitsspeicher und/oder einen Prozessor aufweisen kann.

Der elektrische Strom, der zwischen der Fahrleitung und dem Stromabnehmer des Fahrzeugs übertragen wird oder fließt, kann wie bereits erwähnt insbesondere ein Wechselstrom sein oder einen Wechselstromanteil aufweisen. Der Stromanteil ist gemäß den Ansprüchen ein Gleichstromanteil oder ein Wechselstromanteil, dessen Frequenz unterhalb einer vordefinierten Frequenz liegt. Das Ermitteln der Werte des Stromanteils kann zum Beispiel mithilfe eines Tiefpassfilters erfolgen. Der Tiefpassfilter kann zum Beispiel hardwarebasiert (durch elektrische Bauelemente realisiert) oder softwarebasiert (durch Programmcode realisiert) sein. Die maximale Frequenz, die der Tiefpassfilter erlaubt, kann vordefiniert sein und zum Beispiel zwischen 0,1 oder 1 Hertz (untere Grenze) oder 5 oder 10 oder 20 (obere Grenze) Hertz liegen. Die obere Grenze kann insbesondere unterhalb der Frequenz eines Fahrstroms in der Fahrleitung liegen.

Die Detektion der Absenkung erfolgt mithilfe der Werte des Stromanteils und eines vordefinierten Kriteriums.

"Mithilfe der Werte des Stromanteils" bedeutet insbesondere, dass die Werte des Stromanteils berücksichtigt und/oder ausgewertet werden.

"Mithilfe des vordefinierten Kriteriums" bedeutet insbesondere, dass das vordefinierte Kriterium angewendet wird. Von einem vordefinierten Kriterium kann auch dann gesprochen werden, wenn die Vorgehensweise bei der Anwendung des Kriteriums vorgegeben ist, das Kriterium jedoch zum Beispiel erst nach dem Vorliegen der Werte des Stromanteils abschließend festgelegt wird, zum Beispiel ein Grenzwert festgelegt wird.

Das Kriterium beinhaltet, dass die Werte des Stromanteils eine vordefinierte Erkennungsschwelle überschreiten, zum Beispiel, dass eine Anzahl von Werten des Stromanteils eine vordefinierte Stromstärke innerhalb eines Mindestzeitintervalls überschreiten und/oder dass die Anzahl der Werte eine vordefinierte Frequenz innerhalb des Mindestzeitintervalls oder eines weiteren Mindestzeitintervalls unterschreitet.

Die Detektion kann insbesondere mithilfe einer Detektionseinrichtung erfolgen. Die Detektionseinrichtung kann eine Recheneinrichtung aufweisen, zum Beispiel einen Computer oder ein Steuergerät, der/das insbesondere ein Eingabegerät (z. B. eine Eingangsschnittstelle, z. B. von der Ermittlungseinrichtung und/oder der weiteren Ermittlungseinrichtung), ein Ausgabegerät (z. B. eine Ausgangsschnittstelle), einen festen Speicher, einen Arbeitsspeicher und/oder einen Prozessor aufweisen kann. Die Ermittlungseinrichtung und/oder die weitere Ermittlungseinrichtung und/oder die Detektionseinrichtung können eine gemeinsame Einrichtung darstellen. Die Detektion kann als Resultat zum Beispiel eine Meldung, zum Beispiel ausgegeben durch ein Ausgabegerät, aufweisen, die bedeutet, dass eine Absenkung detektiert worden ist.

Die Absenkung kann im Sinne eines Anwachsens eines Abstands zwischen der Fahrleitung und dem Stromabnehmer verstanden werden. Das Anwachsen kann zum Zeitpunkt der Detektion - also der Anwendung des erfindungsgemäßen Verfahrens - bereits beendet sein, zum Beispiel, wenn eine Schneelast auf dem Stromabnehmer konstant ist. Die Absenkung kann daher verstanden werden wie ein Abstand zwischen der Fahrleitung und dem Stromabnehmer gegenüber einer Sollposition des Stromabnehmers, insbesondere eines Schleifelements des Stromabnehmers. In der Sollposition des Stromabnehmers berühren sich der Stromabnehmer und die Fahrleitung.

Ein Absenken muss nicht zwangsläufig im Zeitpunkt der Anwendung des erfindungsgemäßen Verfahrens in dem Sinne fortdauern, dass ein Abstand zwischen Fahrleitung und Stromabnehmer nach wie vor anwächst. Es ist jedoch nicht ausgeschlossen, dass der Abstand zwischen Fahrleitung und Stromabnehmer zum Zeitpunkt der Anwendung des erfindungsgemäßen Verfahrens anwächst. Die Absenkung kann auch verstanden werden wie ein kontinuierlicher Prozess, in dem der Abstand anwächst. Die Absenkung kann alternativ oder zusätzlich verstanden als Abstand zwischen Stromabnehmer und Fahrleitung. Der Abstand kann verursacht worden sein aufgrund eines vorherigen oder fortdauernden Absenkens.

Wird die Absenkung detektiert, kann eine Schutzmaßnahme, zum Beispiel mithilfe einer Schutzeinrichtung, erfolgen. Durch eine solche Schutzmaßnahme kann zum Beispiel ein weiteres Ausbilden des Lichtbogens vermieden werden.

Das vorgestellte Verfahren löst auf konstruktiv und technisch einfache Art und Weise die Aufgabe, eine Absenkung eines Stromabnehmers eines Fahrzeugs zu detektieren. Eine Umsetzung ist kostengünstig zum Beispiel an einem Primärstromkreis des Schienenfahrzeugs möglich. So kann eine Voraussetzung geschaffen werden, Gefahren und Beschädigungen beteiligter Bauteile durch Lichtbögen zwischen der Fahrleitung und dem Stromabnehmer zu vermeiden und die Betriebssicherheit des Fahrzeugs zu erhöhen. Auch kann der Primärstromkreis vor Strömen geschützt werden, für die er nicht ausgelegt ist.

Gemäß einer vorteilhaften Ausgestaltung des erfindungsgemäßen Verfahrens weist es zusätzlich auf:
- Einleiten und/oder Ausführen einer Schutzmaßnahme, wenn die Absenkung detektiert wurde.

Die Schutzmaßnahme kann ausgestaltet sein, Gefahren oder Beschädigungen beteiligter Bauteile durch Lichtbögen im Falle der Absenkung zu vermeiden und so die Betriebssicherheit im Falle der Absenkung oder danach zu erhöhen. Die Schutzmaßnahme kann insbesondere ausgestaltet sein, den Lichtbogen zu beenden und/oder zu löschen und/oder zu vermeiden und/oder einen menschlichen Bediensteten, zum Beispiel einen Zugführer, zu warnen/zu informieren und/oder Fahrgäste/Menschen in der Umgebung zu warnen/zu informieren. Die Schutzmaßnahme kann auch beinhalten, eine Betriebsfähigkeit des Fahrzeugs zu erhalten oder wiederherzustellen. Das Einleiten und/oder Ausführen der Schutzmaßnahme kann insbesondere automatisch erfolgen, zum Beispiel mithilfe einer Schutzeinrichtung. Die Schutzeinrichtung kann insbesondere zum Beispiel eine Steuereinrichtung und/oder einen Computer und/oder ein Ausgabegerät (zum Beispiel einen Lautsprecher, einen Bildschirm, eine LED-Anzeige oder ein vibrierendes Element) und/oder einen Aktor (zum Beispiel einen weggesteuerten oder einen kraftgesteuerten Aktor) aufweisen.

In einer vorteilhaften Ausgestaltung des erfindungsgemäßen Verfahrens weist die Schutzmaßnahme ein Unterbrechen des elektrischen Stroms oder eine Ausgabe eines Warnsignals auf.

Das Unterbrechen des elektrischen Stroms kann mithilfe eines Schalters erfolgen. Der Schalter kann mit dem Stromabnehmer elektrisch verbunden sein. Es kann sich zum Beispiel um einen Schalter an einem Primärstromkreis des Fahrzeugs handeln. Eine automatische Betätigung, zum Beispiel mithilfe einer Steuereinrichtung, ist möglich. Eine automatische Betätigung kann erfolgen, wenn der Lichtbogen detektiert worden ist.

Die Ausgabe des Warnsignals kann insbesondere mithilfe eines Ausgabegeräts erfolgen. Es kann sich zum Beispiel um ein optisches oder akustisches oder haptisches Warnsignal handeln. Demgemäß kann das Ausgabegerät zum Beispiel
- ein Lautsprecher im Falle eines akustischen Warnsignals;
- ein Bildschirm oder eine LED-Anzeige oder eine LED im Falle eines optischen Warnsignals;
- ein vibrierendes Element im Falle eines haptischen Warnsignals sein.

Der genannte Schalter und/oder die genannte Steuereinrichtung und/oder die genannten Ausgabegeräte können Teil einer Schutzeinrichtung sein oder mit einer Schutzeinrichtung verbunden sein. Die genannte Steuereinrichtung kann mit einer Ermittlungseinrichtung und/oder einer Detektionseinrichtung eine gemeinsame Einrichtung bilden.

Das Unterbrechen eines elektrischen Stroms oder die Ausgabe eines Warnsignals sind technisch leicht umsetzbare, kostengünstige und effiziente Schutzmaßnahmen. Die Schutzmaßnahmen können einfach, insbesondere mithilfe bereits am Fahrzeug vorhandener technischer Einrichtungen, und/oder automatisch realisiert werden. Zum Beispiel kann das Ausgabegerät ein im oder am Fahrzeug vorhandener Lautsprecher oder ein im oder am Fahrzeug vorhandener Bildschirm sein.

In einer vorteilhaften Ausgestaltung des erfindungsgemäßen Verfahrens weist die Schutzmaßnahme ein Verändern einer Haltekraft des Stromabnehmers oder ein Verstellen des Stromabnehmers auf.

Mit den genannten Maßnahmen kann der Kontakt des Stromabnehmers, insbesondere eines Schleifelements des Stromabnehmers, zur Fahrleitung ggf. wiederhergestellt werden. Das Verändern der Haltekraft kann zum Beispiel mithilfe eines kraftgesteuerten Aktors erfolgen. Das Verstellen des Stromabnehmers kann zum Beispiel mithilfe eines weggesteuerten Aktors erfolgen. Der kraftgesteuerte Aktor und/oder der weggesteuerte Aktor kann/können Teil einer Schutzeinrichtung sein oder mit einer Schutzeinrichtung verbunden sein.

Die vorgeschlagenen Schutzmaßnahmen sind technisch leicht umsetzbare, kostengünstige und effiziente Schutzmaßnahmen, die einen Lichtbogen vermeiden können und die Betriebsfähigkeit des Fahrzeugs erhalten oder wiederherstellen können, insbesondere automatisch, ggf. ohne menschliches Zutun.

In einer vorteilhaften Ausgestaltung des erfindungsgemäßen Verfahrens ist der Stromanteil ein Gleichstromanteil oder ist der Stromanteil ein Wechselstromanteil, dessen Frequenzwert unter einem vordefinierten Frequenzwert liegt.

Auf die obigen Bemerkungen, die für eine solche Ausgestaltung gelten können, wird hingewiesen. Es hat sich gezeigt, dass Lichtbögen, die im Falle der Absenkung auftreten, üblicherweise einen derartigen Stromanteil bewirken. Derartige Stromanteile sind leicht und mit einfachen Mitteln feststellbar, zum Beispiel mithilfe eines Tiefpassfilters. Insbesondere sind sie leicht feststellbar, wenn der eigentliche Fahrstrom ein Wechselstrom ist.

In einer vorteilhaften Ausgestaltung des erfindungsgemäßen Verfahrens werden die Werte der elektrischen Stromstärke in einem zeitlichen Verlauf ermittelt.

Das heißt, die Werte der elektrischen Stromstärke können in einer zeitlichen Abfolge über den Messzeitraum ermittelt werden. Eine Ermittlung der Werte der elektrischen Stromstärke in einem zeitlichen Verlauf kann insbesondere deshalb durchgeführt werden, um den Stromanteil mit hoher Sicherheit und möglichst eindeutig identifizieren zu können. Die Werte des Stromanteils können ebenfalls dem zeitlichen Verlauf entsprechend ermittelt werden. Die Qualität der Detektion der Absenkung wird verbessert. Insbesondere kann die Qualität der Detektion verbessert werden, wenn der zeitliche Verlauf einen vordefinierten Mindestzeitraum umfasst, zum Beispiel 0,1 oder 1 oder 2 oder 5 Sekunden.

In einer vorteilhaften Ausgestaltung des erfindungsgemäßen Verfahrens befindet sich das Fahrzeug im Stillstand.

Auf die obigen Bemerkungen, die für eine solche Ausgestaltung gelten können, wird hingewiesen. Im Stillstand besteht grundsätzlich eine stark erhöhte Gefahr, dass es bei der Absenkung des Stromabnehmers zu Beschädigungen beteiligter Bauteile, insbesondere der Fahrleitung und dem Stromabnehmer, kommt. Insbesondere kann es nach wenigen Minuten zu einem Fahrleitungsabriss kommen. Befindet sich das Fahrzeug im Stillstand, ist ein Gewinn an Betriebssicherheit daher besonders hoch.

Weiterhin wird vorgeschlagen eine Vorrichtung zur Detektion einer Absenkung eines Stromabnehmers eines Fahrzeugs, insbesondere eines Schienenfahrzeugs, von einer Fahrleitung, aufweisend:
- eine Ermittlungseinrichtung, ausgestaltet dazu, Werte der elektrischen Stromstärke eines elektrischen Stroms, der zwischen der Fahrleitung und dem Stromabnehmer in einem Messzeitraum übertragen wird oder fließt, zu ermitteln,
   wobei die Ermittlungseinrichtung außerdem ausgestaltet ist, Werte eines Stromanteils mithilfe der Werte der elektrischen Stromstärke zu ermitteln, oder die Vorrichtung eine weitere Ermittlungseinrichtung aufweist, die ausgestaltet ist, Werte eines Stromanteils mithilfe der Werte der elektrischen Stromstärke zu ermitteln;
- eine Detektionseinrichtung, ausgestaltet, die Absenkung mithilfe der Werte des Stromanteils und eines vordefinierten Kriteriums zu detektieren.

Die Vorrichtung kann insbesondere ausgestaltet sein, das erfindungsgemäße Verfahren auszuführen. In Bezug auf die Vorrichtung wird vollinhaltlich Bezug genommen auf die Ausführungen zum erfindungsgemäßen Verfahren in allen vorgestellten Ausgestaltungen. Insbesondere wird Bezug genommen auf die Ausführungen zur Ermittlungseinrichtung und zur weiteren Ermittlungseinrichtung und zur Detektionseinrichtung. Die genannten Vorteile des erfindungsgemäßen Verfahrens gelten analog für die erfindungsgemäße Vorrichtung.

In einer vorteilhaften Ausgestaltung der erfindungsgemäßen Vorrichtung weist sie auf:
- eine Schutzeinrichtung, ausgestaltet, eine Schutzmaßnahme einzuleiten und/oder auszuführen, wenn die Absenkung detektiert wurde.

Die Vorrichtung kann insbesondere ausgestaltet sein, das erfindungsgemäße Verfahren in einer Ausgestaltung auszuführen, in der eine Schutzmaßnahme eingeleitet oder ausgeführt wird. In Bezug auf die vorgestellte Ausgestaltung der Vorrichtung wird vollinhaltlich Bezug genommen auf die Ausführungen zum erfindungsgemäßen Verfahren, insbesondere auf die Ausgestaltungen, in denen eine Schutzmaßnahme eingeleitet oder ausgeführt wird. Insbesondere wird Bezug genommen auf die Ausführungen zu Schutzeinrichtungen. Die genannten Vorteile des erfindungsgemäßen Verfahrens gelten analog für die vorgestellte Ausgestaltung der erfindungsgemäßen Vorrichtung.

In einer vorteilhaften Ausgestaltung der erfindungsgemäßen Vorrichtung weist sie einen Tiefpassfilter auf.

Die Vorrichtung kann insbesondere ausgestaltet sein, das erfindungsgemäße Verfahren in einer Ausgestaltung auszuführen, in der das Ermitteln von Werten des Stromanteils unter Nutzung eines Tiefpassfilters durchgeführt wird. Der Tiefpassfilter der erfindungsgemäßen Vorrichtung kann insbesondere Teil der Ermittlungseinrichtung oder der weiteren Ermittlungseinrichtung sein. Der Tiefpassfilter kann zum Beispiel softwarebasiert und/oder hardwarebasiert sein.

In Bezug auf die vorgestellte Ausgestaltung der Vorrichtung wird vollinhaltlich Bezug genommen auf die Ausführungen zum erfindungsgemäßen Verfahren, insbesondere auf die Ausgestaltungen, in denen ein Tiefpassfilter verwendet wird. Insbesondere wird Bezug genommen auf die Ausführungen zum Tiefpassfilter. Die genannten Vorteile des erfindungsgemäßen Verfahrens gelten analog für die vorgestellte Ausgestaltung der erfindungsgemäßen Vorrichtung.

Weiterhin wird ein Fahrzeug, insbesondere ein Schienenfahrzeug, mit der erfindungsgemäßen Vorrichtung vorgeschlagen. Es kann sich zum Beispiel um einen Schnellzug, einen Hochgeschwindigkeitszug, einen Regionalzug, eine Straßenbahn oder eine Untergrundbahn oder eine Stadtbahn handeln. Alternativ könnte das Fahrzeug eine andere Art von Fahrzeug sein, zum Beispiel ein Oberleitungs-LKW oder ein Oberleitungsbus.

Ausführungsbeispiele der Erfindung werden im Folgenden unter Nutzung der beigefügten Zeichnung dargestellt. Die einzelnen Figuren der Zeichnung zeigen:
- Fig. 1: eine schematische Ansicht einer Ausgestaltung der erfindungsgemäßen Vorrichtung, teilweise angebracht an bzw. in einem Schienenfahrzeug;
- Fig. 2: eine schematische Ansicht einer Ausgestaltung einer Erkennungs- und Steuereinrichtung;
- Fig. 3: eine schematische Ansicht einer Ausgestaltung des erfindungsgemäßen Verfahrens.

Gleiche Bezugszeichen können für gleiche oder wesensgleiche Merkmale, Einrichtungen, Bauteile, Gegenstände oder Instanzen verwendet sein.

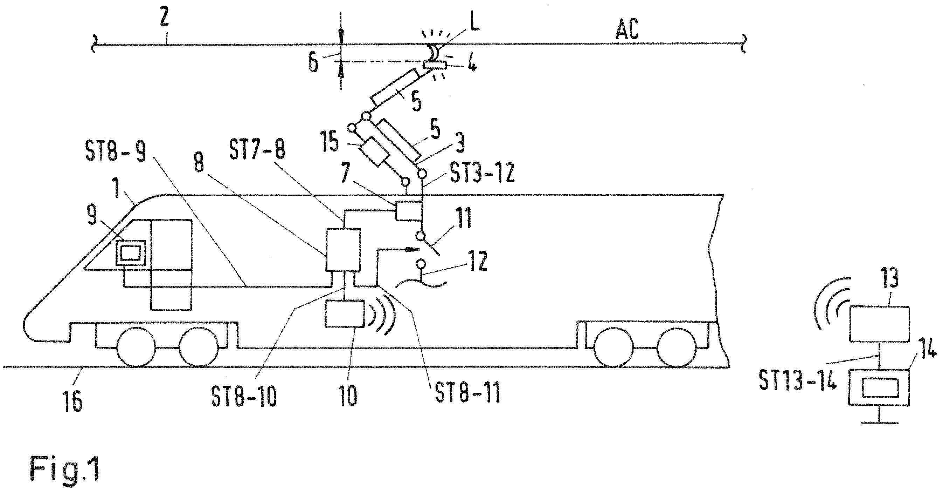

Fig. 1 zeigt ein Fahrzeug 1, das als Schienenfahrzeug ausgeführt ist. Es befindet sich auf Schienen 16. Weiterhin ist eine Fahrleitung 2 dargestellt, die als Fahrstrom gewöhnlicher Weise einen Wechselstrom AC leitet. Das Fahrzeug 1 weist einen Stromabnehmer 3 auf, der als Pantograph ausgeführt ist. Alternative Ausführungen sind möglich. Der Stromabnehmer 3 weist eine Schleifleiste 4 auf. Die Schleifleiste 4 ist von der Fahrleitung abgesenkt, da Schnee- und Eislasten 5 sich auf dem Stromabnehmer befinden und ihn nach unten in Richtung zum Fahrzeug 1 drücken. Es besteht daher eine Absenkung 6, die zum Beispiel eine Ausdehnung im Bereich von Millimetern oder Zentimetern haben kann. Die Absenkung 6 ist schematisch mithilfe von Pfeilen dargestellt. Zwischen der Fahrleitung 2 und der Schleifleiste 4 des Stromabnehmers 3 wird ein elektrischer Strom übertragen, der einen instabilen Lichtbogen L ausbildet.

Über eine elektrisch leitende Schnittstelle ST3-12 (zum Beispiel ausgeführt als stromführendes Kabel) ist der Stromabnehmer 3 mit einem Primärstromkreis 12 des Fahrzeugs 1 verbunden. Der Primärstromkreis 12 ist nur abgeschnitten dargestellt. An der elektrisch leitenden Schnittstelle ST3-12 ist eine Strommesseinrichtung 7, zum Beispiel ausgeführt als Amperemeter, vorhanden, die zur Messung von Werten der elektrischen Stromstärke des elektrischen Stroms dient, der zwischen der Fahrleitung 1 und dem Stromabnehmer 3 übertragen wird oder fließt - auch in dem dargestellten Falle, bei dem der elektrische Strom über den Lichtbogen L übertragen wird oder fließt.

Die elektrisch leitende Schnittstelle ST3-12 weist weiterhin einen elektrischen Schalter 11 auf, der den Primärstromkreis 12 von einer Stromversorgung durch die Fahrleitung 2 trennen kann.

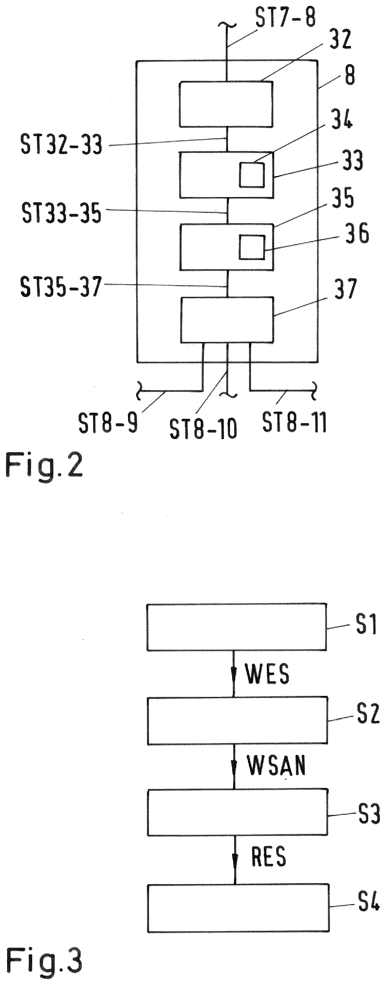

Mit der Strommesseinrichtung 7 ist über eine signalleitende Schnittstelle ST7-8 eine Erkennungs- und Steuereinrichtung 8 verbunden, die ausgestaltet ist, die Absenkung 6 zu erkennen und eine Schutzmaßnahme einzuleiten. Die Erkennungs- und Steuereinrichtung 8 wird in Fig. 2 detailliert dargestellt. Die Erkennungs- und Steuereinrichtung 8 kann eine Recheneinrichtung oder mehrere Recheneinrichtungen oder einen oder mehrere Computer aufweisen. Sie kann insbesondere mit ihren in Fig. 2 dargestellten Instanzen als Computer ausgeführt sein. Auf die folgenden Bemerkungen zu Fig. 2 wird verwiesen.

Signalleitende Schnittstellen können allgemein zum Beispiel als Kabel (zum Beispiel Datenkabel oder Netzwerkkabel) oder drahtlose Datenverbindungen (zum Beispiel Funk oder WLAN) oder sonstige Datenverbindungen (zum Beispiel Verbindungen auf einer Platine) ausgestaltet sein. Signalleitende Schnittstellen können allgemein Datenschnittstellen sein. Es ist nicht ausgeschlossen, dass sie auch stromleitend sein können oder zusätzlich zur Energieversorgung mit elektrischer Energie dienen können.

Über die signalleitende Schnittstelle ST8-9 ist die Erkennungs- und Steuereinrichtung 8 mit einem ersten Ausgabegerät 9 verbunden. Das erste Ausgabegerät 9 weist einen Monitor auf. Es ist ausgestaltet, eine Warnmeldung anzuzeigen, zum Beispiel einem Zugführer. Es befindet sich in einem Führerstand des Schienenfahrzeugs. Alternativ könnte es an einem anderen Ort in oder an dem Schienenfahrzeug angeordnet sein. Eine solche Anzeige einer Warnmeldung ist eine erste Schutzmaßnahme.

Über die signalleitende Schnittstelle ST8-10 ist die Erkennungs- und Steuereinrichtung 8 mit einer Sendeeinrichtung 10 verbunden. Die Sendeeinrichtung 10 ist ausgestaltet, ein Warnsignal an eine Empfangseinrichtung 13 zu senden (z. B. per Funksignal oder Mobilfunk). Die Empfangseinrichtung 13 ist ausgestaltet, das Warnsignal zu empfangen. Über die signalleitende Schnittstelle ST13-14 kann dann das Warnsignal an ein zweites Ausgabegerät 14 weitergeleitet werden. Das zweite Ausgabegerät 14 weist einen Monitor auf. Es ist ausgestaltet, eine Warnmeldung anzuzeigen, zum Beispiel einem Bediensteten, der sich nicht an Bord des Fahrzeugs 1 befindet. Die Empfangseinrichtung 13 und das zweite Ausgabegerät 14 können sich zum Beispiel in einer Leitzentrale und/oder einem Verwaltungsgebäude befinden.

Über die signalleitende Schnittstelle ST8-11 ist die Erkennungs- und Steuereinrichtung 8 mit dem elektrischen Schalter 11 verbunden. Der elektrische Schalter 11 weist einen externen Signaleingang auf (als Pfeil dargestellt, der auf den Schalter zeigt), mit dem die signalleitende Schnittstelle ST8-11 verbunden ist. Der elektrische Schalter 11 ist ausgestaltet, bei Eingang eines entsprechenden Öffnungssignals über den externen Signaleingang geöffnet zu werden. Durch eine Öffnung kann ein Stromfluss in den Primärstromkreis 12 und somit auch der Lichtbogen L unterbunden werden.

In Fig. 2 wird die Erkennungs- und Steuereinrichtung 8 detaillierter dargestellt. Die signalleitende Schnittstelle ST7-8 führt zu einer Speichereinrichtung 32. Sie ist ausgestaltet, mithilfe der Strommesseinrichtung 7 erhaltene Werte der elektrischen Stromstärke des elektrischen Stroms, der zwischen der Fahrleitung 2 und dem Stromabnehmer 3 in einem Messzeitraum übertragen wird oder fließt, zu speichern. Die Speichereinrichtung 32 kann zum Beispiel als Arbeitsspeicher (zum Beispiel RAM) oder nichtflüchtiger Speicher (zum Beispiel eine Speicherkarte oder ein Solid-State-Drive oder eine Festplatte) ausgeführt sein.

Die Strommesseinrichtung 7 kann als eine erste Ermittlungseinrichtung betrachtet werden, die dazu ausgestaltet dazu, Werte der elektrischen Stromstärke eines elektrischen Stroms, der zwischen der Fahrleitung und dem Stromabnehmer in dem Messzeitraum übertragen wird oder fließt, zu ermitteln.

Zwischen der Speichereinrichtung 32 und einer Recheneinrichtung 33 (die als zweite Ermittlungseinrichtung interpretiert werden kann) besteht die signalleitende Schnittstelle ST32-33. Die Recheneinrichtung 33 weist einen Tiefpassfilter 34 auf, der ausgestaltet ist, anhand der Werte des elektrischen Stroms, der zwischen einer Fahrleitung 2 und den Stromabnehmer 3 übertragen wird oder fließt, Werte eines Stromanteils zu ermitteln (zum Beispiel herauszufiltern). Die Werte des Stromanteils können insbesondere Werte eines Gleichstromanteils und/oder eines Wechselstromanteils sein, dessen Frequenz unter einer vordefinierten Frequenz liegt. Die vordefinierte Frequenz liegt gemäß den Patentansprüchen unterhalb der Frequenz des Wechselstroms AC. Der Tiefpassfilter 34 kann softwarebasiert umgesetzt sein, das heißt, die Recheneinrichtung 33 kann ausgestaltet sein, die Funktion des Tiefpassfilters mithilfe eines entsprechenden Programmcodes umsetzen. Die Recheneinrichtung 33 kann einen Speicher aufweisen, auf dem ein solcher Programmcode zur Ausführung gespeichert ist. Die Recheneinrichtung 33 kann als Computer ausgestaltet sein.

Zwischen der Recheneinrichtung 33 und einer Detektionseinrichtung 35 besteht die signalleitende Schnittstelle ST33-35. Die Detektionseinrichtung 35 ist ausgestaltet, Absenkungen zu erkennen. Absenkungen werden hierbei erkannt, wenn die Werte des Stromanteils ein vordefiniertes Kriterium 36 erfüllen. Das vordefinierte Kriterium 36 kann zum Beispiel lauten: Über einen Zeitraum von mindestens 0,5 Sekunden müssen Werte des Stromanteils einen Mindestwert überschreiten. Ein Erfüllen des Kriteriums kann als Hinweis auf den Lichtbogen L interpretiert werden, der aufgrund der Absenkung 6 entstanden ist und dessen Detektion somit auf die Absenkung 6 hinweist. Die Detektionseinrichtung 35 kann als Computer ausgestaltet sein. Die Recheneinrichtung 33 und die Detektionseinrichtung 35 können gemeinsam als ein oder mehrere Computer ausgestaltet sein. Die Recheneinrichtung 33 kann alternativ die Funktion der Detektionseinrichtung 35 umfassen.

Zwischen der Detektionseinrichtung 35 und einer Signalausgabeeinrichtung 37 besteht die signalleitende Schnittstelle ST35-37. Die Signalausgabeeinrichtung 37 ist ausgestaltet, Signale (zum Beispiel Warn- oder Informationssignale) zu generieren und über die signalleitenden Schnittstellen ST8-9, ST8-10 weiterzuleiten. Weiterhin ist sie ausgestaltet, das Öffnungssignal über die Schnittstelle ST8-11 an den elektrischen Schalter 11 zu senden.

In Fig. 1 ist weiterhin ein Aktor 15 am Stromabnehmer dargestellt. Er könnte, über eine entsprechende, nicht extra dargestellte Schnittstelle zwischen ihm und der Signalausgabeeinrichtung 37 ebenfalls ansteuerbar sein, sodass eine Veränderung einer Haltekraft oder eine Verstellung des Stromabnehmers 3 (zum Beispiel, dass eine Absenkung wieder kompensiert wird, sodass der Stromabnehmer 3 die Fahrleitung 2 wieder berührt) anhand eines entsprechenden Signals aus der Signalausgabeeinrichtung 37 bewirkt wird.

Auch die Gesamtheit aus der Strommesseinrichtung 7 und der Erkennungs- und Steuereinrichtung 8 und der signalleitenden Schnittstelle ST7-8 kann alternativ als eine Ermittlungseinrichtung betrachtet werden. Diese Ermittlungseinrichtung ist ausgestaltet, Werte der elektrischen Stromstärke eines elektrischen Stroms, der zwischen der Fahrleitung 2 und dem Stromabnehmer 3 übertragen wird oder fließt, zu ermitteln und Werte des Stromanteils zu ermitteln. Zudem ist eine Detektionseinrichtung 37 integriert. Diese Ermittlungseinrichtung kann zum Beispiel als Amperemeter mit angeschlossenem Computer ausgeführt sein.

Wenn die Absenkung 6 der Schleifleiste 4 aufgrund der Schnee- und Eislasten 5 vorliegt, tritt der Lichtbogen L auf. Die Strommesseinrichtung 7 misst dann veränderte Werte des elektrischen Stroms, der zwischen der Fahrleitung 1 und dem Stromabnehmer 3 übertragen wird oder fließt. Die Speichereinrichtung 32 speichert diese Werte des elektrischen Stroms zumindest temporär. Werte des Stromanteils (Gleichstromanteil oder Wechselstromanteil, dessen Frequenz unter der vordefinierten Frequenz liegt) können mithilfe der Recheneinrichtung 33 und dem Tiefpassfilter 34 ermittelt werden. Erfüllen die Werte des Stromanteils, festgestellt durch die Detektionseinrichtung 37, das vordefinierte Kriterium 36, erfolgt über die signalleitende Schnittstelle ST35-37 ein entsprechendes Signal an die Signalausgabeeinrichtung 37, die ihrerseits die Warnsignale über die signalleitenden Schnittstellen ST8-9, ST8-10 an das erste Ausgabegerät 9 und das zweite Ausgabegerät 14 weiterleitet. Daraufhin werden die Warnsignale als Warnmeldungen durch das erste Ausgabegerät 9 und das zweite Ausgabegerät 14 ausgegeben. Dies sind Schutzmaßnahmen. Zudem wird durch die Signalausgabeeinrichtung 37 das Öffnungssignal an den elektrischen Schalter 11 gesendet, der sich daraufhin öffnet. Dies ist ebenfalls eine Schutzmaßnahme. So kann der Lichtbogen L gelöscht oder vermieden werden. Auch kann durch die Signalausgabeeinrichtung 37 eine Ansteuerung des Aktors 15 erfolgen, sodass der Stromabnehmer 3 die Fahrleitung 2 wieder berührt. Dies ist ebenfalls eine Schutzmaßnahme. Bei den in diesem Absatz genannten Abläufen kommen die vormals genannten und erläuterten Schnittstellen zum Einsatz. Die zur Durchführung der Schutzmaßnahmen notwendigen beschriebenen Bauteile und Einheiten sind allesamt optional.

In Fig. 3 wird eine Ausgestaltung des erfindungsgemäßen Verfahrens zur Detektion einer Absenkung (die zum Beispiel die Absenkung 6 sein kann) eines Stromabnehmers (zum Beispiel des Stromabnehmers 3) eines Fahrzeugs (zum Beispiel des Fahrzeugs 1) von einer Fahrleitung (zum Beispiel der Fahrleitung 2) gezeigt. Es wird vollinhaltlich Bezug genommen auf die Beschreibung der beschriebenen Ausgestaltung der erfindungsgemäßen Vorrichtung.

In einem ersten Schritt S1 werden Werte WES der elektrischen Stromstärke eines elektrischen Stroms in einem zeitlichen Verlauf über einen Messzeitraum ermittelt, der zwischen der Fahrleitung 2 und dem Stromabnehmer 3 übertragen wird oder fließt, zum Beispiel mithilfe der Strommesseinrichtung 7. In einem zweiten Schritt S2 werden anhand der Werte WES der elektrischen Stromstärke Werte WSAN eines Stromanteils ermittelt, zum Beispiel mithilfe der Erkennungs- und Steuereinrichtung 8, insbesondere zum Beispiel mithilfe der Recheneinrichtung 33 und dem Tiefpassfilter 34. Im Schritt S3 wird mithilfe eines vordefinierten Kriteriums, dass zum Beispiel das vordefinierte Kriterium 36 sein kann, ermittelt, ob eine Absenkung vorliegt. Falls ja, wird in einem vierten optionalen Schritt S4, vermittelt durch ein positives Resultat RES (Ein Signal, das bedeutet, dass eine Absenkung vorliegt) eine Schutzmaßnahme eingeleitet, zum Beispiel die Ausgabe einer Warnmeldung durch ein Ausgabegerät, dass das erste Ausgabegerät 9 oder das zweite Ausgabegerät 14 sein kann, oder das Senden eines Öffnungssignals an einen elektrischen Schalter eines Primärstromkreises (zum Beispiel des Primärstromkreises 12) des Fahrzeugs 1, der der elektrische Schalter 11 sein kann oder eine Ansteuerung eines Aktors zur Änderung einer Stellung und/oder Höhe des Stromabnehmers, sodass die Absenkung 6 vermieden werden kann.

Das Verfahren kann mehrmals wiederholt werden, auch kontinuierlich, zum Beispiel während eines Betriebs oder während einer Standzeit des Fahrzeugs. Die genannten Schritte können in zeitlicher Abfolge erfolgen, zum Beispiel derart, dass der zweite Schritt S2 erfolgt, wenn der erste Schritt S1 vollständig vollzogen ist, der dritte Schritt S3 erfolgt, wenn der zweite Schritt vollständig vollzogen ist und der vierte Schritt S4 erfolgt, wenn der dritte Schritt S3 vollständig vollzogen ist. Der erste Schritt S1 kann alternativ erst teilweise erfolgen, sodass erst ein Teil der Werte WES der elektrischen Stromstärke im Messzeitraum in dem zweiten Schritt S2 und in dem dritten Schritt S3 und ggf. dem vierten Schritt S4. bereits verarbeitet werden. Wiederholungen des zweiten Schritts S2, des dritten Schritts S3 und ggf. des vierten Schritts S4 können dann mit weiteren Werten WES der elektrischen Stromstärke erfolgen, sobald sie ermittelt sind.

### Bezugszeichen:

1 Fahrzeug
10 Sendeeinrichtung
11 elektrischer Schalter
12 Primärstromkreis
13 Empfangseinrichtung
14 zweites Ausgabegerät
15 Aktor
16 Schienen
2 Fahrleitung
3 Stromabnehmer
32 Speichereinrichtung
33 Recheneinrichtung
34 Tiefpassfilter
35 Detektionseinrichtung
36 vordefiniertes Kriterium
37 Signalausgabeeinrichtung
4 Schleifleiste
5 Schnee- und Eislasten
6 Absenkung
7 Strommesseinrichtung
8 Erkennungs- und Steuereinrichtung
9 erstes Ausgabegerät
AC Wechselstrom
L Lichtbogen
RES positives Resultat (Absenkung liegt vor)
ST13-14 signalleitende Schnittstelle
ST3-12 elektrisch leitende Schnittstelle
ST32-33 signalleitende Schnittstelle
ST33-35 signalleitende Schnittstelle
ST35-37 signalleitende Schnittstelle
ST7-8 signalleitende Schnittstelle
ST8-10 signalleitende Schnittstelle
ST8-11 signalleitende Schnittstelle
ST8-9 signalleitende Schnittstelle
WES Werte der elektrischen Stromstärke
WSAN Werte des Stromanteils

## Patentansprüche

1. Verfahren zur Detektion einer Absenkung (6) eines Stromabnehmers (3) eines Fahrzeugs (1), insbesondere eines Schienenfahrzeugs, von einer Fahrleitung (2), aufweisend:
- Ermitteln von Werten (WES) der elektrischen Stromstärke eines elektrischen Stroms, der zwischen der Fahrleitung (2) und dem Stromabnehmer (3) in einem Messzeitraum übertragen wird oder fließt;
- Ermitteln von Werten (WSAN) eines Stromanteils des elektrischen Stroms mithilfe der Werte (WES) der elektrischen Stromstärke;
- Detektion der Absenkung (6) unter Berücksichtigung der Werte des Stromanteils und eines vordefinierten Kriteriums;
**dadurch gekennzeichnet, dass**
- der Stromanteil ein Gleichstromanteil ist oder
- der Stromanteil ein Wechselstromanteil ist, dessen Frequenzwert unter einem vordefinierten Frequenzwert liegt, wobei der vordefinierte Frequenzwert unterhalb der Frequenz eines Fahrstroms in der Fahrleitung (2) liegt,
wobei das vordefinierte Kriterium beinhaltet, dass die Werte des Stromanteils eine vordefinierte Erkennungsschwelle überschreiten.

2. Verfahren gemäß Anspruch 1, **dadurch gekennzeichnet, dass** es zusätzlich aufweist:
- Einleiten und/oder Ausführen einer Schutzmaßnahme, wenn die Absenkung (6) detektiert wurde.

3. Verfahren gemäß Anspruch 2, **gekennzeichnet dadurch, dass** die Schutzmaßnahme ein Unterbrechen des elektrischen Stroms oder eine Ausgabe eines Warnsignals aufweist.

4. Verfahren gemäß einem der Ansprüche 2 oder 3, **gekennzeichnet dadurch, dass** die Schutzmaßnahme ein Verändern einer Haltekraft des Stromabnehmers (3) oder ein Verstellen des Stromabnehmers (3) aufweist.

5. Verfahren gemäß einem der Ansprüche 1-4, **dadurch gekennzeichnet, dass** die Werte (WSAN) des Stromanteils mithilfe eines Tiefpassfilters (34) ermittelt werden.

6. Verfahren gemäß einem der Ansprüche 1-5, **dadurch gekennzeichnet, dass** die Werte (WES) der elektrischen Stromstärke in einem zeitlichen Verlauf ermittelt werden.

7. Verfahren gemäß einem der Ansprüche 1-6, **gekennzeichnet dadurch, dass** sich das Fahrzeug (1) im Stillstand befindet.

8. Vorrichtung zur Detektion einer Absenkung (6) eines Stromabnehmers (3) eines Fahrzeugs (1), insbesondere eines Schienenfahrzeugs, von einer Fahrleitung (2), aufweisend:
- eine Ermittlungseinrichtung, ausgestaltet dazu, Werte (WES) der elektrischen Stromstärke eines elektrischen Stroms, der zwischen der Fahrleitung (2) und dem Stromabnehmer (3) in einem Messzeitraum übertragen wird oder fließt, zu ermitteln,
wobei die Ermittlungseinrichtung außerdem ausgestaltet ist, Werte (WSAN) eines Stromanteils mithilfe der Werte (WES) der elektrischen Stromstärke zu ermitteln;
- eine Detektionseinrichtung (35), ausgestaltet, die Absenkung (6) unter Berücksichtigung der Werte (WSAN) des Stromanteils und eines vordefinierten Kriteriums zu detektieren;
**dadurch gekennzeichnet, dass**
- der Stromanteil ein Gleichstromanteil ist oder
- der der Stromanteil ein Wechselstromanteil ist, dessen Frequenzwert unter einem vordefinierten Frequenzwert liegt, wobei der vordefinierte Frequenzwert unterhalb der Frequenz eines Fahrstroms in der Fahrleitung (2) liegt,
wobei das vordefinierte Kriterium beinhaltet, dass die Werte des Stromanteils eine vordefinierte Erkennungsschwelle überschreiten.

9. Vorrichtung zur Detektion einer Absenkung (6) eines Stromabnehmers (3) eines Fahrzeugs (1), insbesondere eines Schienenfahrzeugs, von einer Fahrleitung (2), aufweisend:
- eine Ermittlungseinrichtung, ausgestaltet dazu, Werte (WES) der elektrischen Stromstärke eines elektrischen Stroms, der zwischen der Fahrleitung (2) und dem Stromabnehmer (3) in einem Messzeitraum übertragen wird oder fließt, zu ermitteln,
eine weitere Ermittlungseinrichtung (33), die ausgestaltet ist, Werte (WSAN) eines Stromanteils mithilfe der Werte (WES) der elektrischen Stromstärke zu ermitteln;
- eine Detektionseinrichtung (35), ausgestaltet, die Absenkung (6) unter Berücksichtigung der Werte (WSAN) des Stromanteils und eines vordefinierten Kriteriums zu detektieren;
**dadurch gekennzeichnet, dass**
- der Stromanteil ein Gleichstromanteil ist oder
- der der Stromanteil ein Wechselstromanteil ist, dessen Frequenzwert unter einem vordefinierten Frequenzwert liegt, wobei der vordefinierte Frequenzwert unterhalb der Frequenz eines Fahrstroms in der Fahrleitung (2) liegt,
wobei das vordefinierte Kriterium beinhaltet, dass die Werte des Stromanteils eine vordefinierte Erkennungsschwelle überschreiten.

10. Vorrichtung gemäß Anspruch 8 oder 9, **dadurch gekennzeichnet, dass** sie aufweist:
- eine Schutzeinrichtung, ausgestaltet, eine Schutzmaßnahme einzuleiten und/oder auszuführen, wenn die Absenkung (6) detektiert wurde.

11. Vorrichtung gemäß einem der Ansprüche 8 bis 10, **dadurch gekennzeichnet, dass** sie einen Tiefpassfilter (34) aufweist.

12. Fahrzeug (1), insbesondere Schienenfahrzeug, mit einer Vorrichtung gemäß einem der Ansprüche 8-11.

## Claims

1. A method for detecting a lowering (6) of a current collector (3) of a vehicle (1), in particular a rail vehicle, from a contact line (2), comprising:
- determining values (WES) of the electric current intensity of an electric current that is transmitted or flows between the contact line (2) and the current collector (3) in a measurement period;
- determining values (WSAN) of a current component of the electric current using the values (WES) of the electric current intensity;
- detecting the lowering (6) taking into account the values of the current component and a predefined criterion;
**characterised in that**
- the current component is a direct current component or
- the current component is an alternating current component the frequency value of which is below a predefined frequency value, wherein the predefined frequency value is below the frequency of a traction current in the contact line (2),
wherein the predefined criterion includes that the values of the current component exceed a predefined detection threshold.

2. The method according to claim 1, **characterised in that** it additionally comprises:
- initiating and/or executing a protective measure when the lowering (6) has been detected.

3. The method according to claim 2, **characterised in that** the protective measure comprises interrupting the electric current or outputting a warning signal.

4. The method according to one of claims 2 or 3, **characterised in that** the protective measure comprises changing a holding force of the current collector (3) or adjusting the current collector (3).

5. The method according to one of claims 1-4, **characterised in that** the values (WSAN) of the current component are determined with the aid of a low-pass filter (34).

6. The method according to one of claims 1-5, **characterised in that** the values (WES) of the electric current are determined in a time course.

7. The method according to one of claims 1-6, **characterised in that** the vehicle (1) is stationary.

8. A device for detecting a lowering (6) of a current collector (3) of a vehicle (1), in particular a rail vehicle, from a contact line (2),
comprising:
- a determination device designed to determine values (WES) of the electric current intensity of an electric current that is transmitted or flows between the contact line (2) and the current collector (3) in a measurement period,
wherein the determination device is also designed to determine values (WSAN) of a current component with the aid of the values (WES) of the electric current intensity;
- a determination device (35) designed to detect the lowering (6) taking into account the values (WSAN) of the current component and a predefined criterion;
**characterised in that**
- the current component is a direct current component or
- the current component is an alternating current component the frequency value of which is below a predefined frequency value, wherein the predefined frequency value is below the frequency of a driving current in the contact line (2),
wherein the predefined criterion includes that the values of the current component exceed a predefined detection threshold.

9. A device for detecting a lowering (6) of a current collector (3) of a vehicle (1), in particular a rail vehicle, from a contact line (2),
comprising:
- a determination device designed to determine values (WES) of the electric current intensity of an electric current that is transmitted or flows between the contact line (2) and the current collector (3) in a measurement period,
- a further determination device (33) designed to determine values (WSAN) of a current component using the values (WES) of the electric current intensity;
- a determination device (35) designed to detect the lowering (6) taking into account the values (WSAN) of the current component and a predefined criterion;
**characterised in that**
- the current component is a direct current component or
- the current component is an alternating current component the frequency value of which is below a predefined frequency value, wherein the predefined frequency value is below the frequency of a driving current in the contact line (2),
wherein the predefined criterion includes that the values of the current component exceed a predefined detection threshold.

10. The device according to claim 8 or 9, **characterised in that** it comprises:
- a protective device designed to initiate and/or execute a protective measure when the lowering (6) has been detected.

11. The device according to one of claims 8 to 10, **characterised in that** it comprises a low-pass filter (34).

12. A vehicle (1), in particular a rail vehicle, with a device according to one of claims 8-11.

## Revendications

1. Procédé de détection d'un abaissement (6) d'un collecteur de courant (3) d'un véhicule (1), en particulier d'un véhicule ferroviaire, par rapport à une caténaire (2), comprenant:
- déterminer des valeurs (WES) de l'intensité d'un courant électrique qui est transmis ou circule entre la caténaire (2) et le collecteur de courant (3) pendant une période de mesure;
- déterminer des valeurs (WSAN) d'une composante de courant du courant électrique à l'aide des valeurs (WES) de l'intensité;
- détection du abaissement (6) en tenant compte des valeurs de la composante de courant du courant électrique et d'un critère prédéfini;
**caractérisé en ce que**
- la composante de courant est une composante de courant continu ou
- la composante de courant est une composante de courant alternatif dont la valeur de fréquence est inférieure à une valeur de fréquence prédéfinie, la valeur de fréquence prédéfinie étant inférieure à la fréquence d'un courant de traction dans la caténaire (2),
le critère prédéfini impliquant que les valeurs de la composante de courant dépassent un seuil de détection prédéfini.

2. Procédé selon la revendication 1, **caractérisé en ce qu'**il comprend en outre :
- déclencher et/ou exécuter une mesure de protection lorsque l'abaissement (6) a été détecté.

3. Procédé selon la revendication 2, **caractérisé en ce que** la mesure de protection comprend une interruption du courant électrique ou une émission d'un signal d'avertissement.

4. Procédé selon l'une des revendications 2 ou 3, **caractérisé en ce que** la mesure de protection comprend une modification d'une force de maintien du collecteur de courant (3) ou un réglage du collecteur de courant (3).

5. Procédé selon l'une quelconque des revendications 1 à 4, **caractérisé en ce que** les valeurs (WSAN) de la composante de courant sont déterminées à l'aide d'un filtre passe-bas (34).

6. Procédé selon l'une quelconque des revendications 1 à 5, **caractérisé en ce que** les valeurs (WES) de l'intensité du courant électrique sont déterminées dans une progression temporelle.

7. Procédé selon l'une quelconque des revendications 1 à 6, **caractérisé en ce que** le véhicule (1) est à l'arrêt.

8. Dispositif pour détecter un abaissement (6) d'un collecteur de courant (3) d'un véhicule (1), en particulier d'un véhicule ferroviaire, par rapport à une caténaire (2), comprenant :
- un dispositif de détermination conçu pour déterminer des valeurs (WES) de l'intensité d'un courant électrique qui est transmis ou circule entre la caténaire (2) et le collecteur de courant (3) pendant une période de mesure, le dispositif de détermination étant en outre conçu pour déterminer des valeurs (WSAN) d'une composante de courant à l'aide des valeurs (WES) de l'intensité;
- un dispositif de détection (35) conçu pour détecter l'abaissement (6) en tenant compte les valeurs (WSAN) de la composante de courant et d'un critère prédéfini;
**caractérisé en ce que**
- la composante de courant est une composante de courant continu ou
- la composante de courant est une composante de courant alternatif dont la valeur de fréquence est inférieure à une valeur de fréquence prédéfinie, la valeur de fréquence prédéfinie étant inférieure à la fréquence d'un courant de traction dans la caténaire (2),
le critère prédéfini impliquant que les valeurs de la composante de courant dépassent un seuil de détection prédéfini.

9. Dispositif pour détecter un abaissement (6) d'un collecteur de courant (3) d'un véhicule (1), en particulier d'un véhicule ferroviaire, par rapport à une caténaire (2), comprenant:
- un dispositif de détermination conçu pour déterminer des valeurs (WES) de l'intensité d'un courant électrique qui est transmis ou circule entre la caténaire (2) et le collecteur de courant (3) pendant une période de mesure,
- un autre dispositif de détermination (33) conçu pour déterminer des valeurs (WSAN) d'une composante de courant à l'aide des valeurs (WES) de l'intensité ;
- un dispositif de détection (35) conçu pour détecter l'abaissement (6) en tenant compte les valeurs (WSAN) de la composante de courant et d'un critère prédéfini ;
**caractérisé en ce que**
- la composante de courant est une composante de courant continu ou
- la composante de courant est une composante de courant alternatif dont la valeur de fréquence est inférieure à une valeur de fréquence prédéfinie, la valeur de fréquence prédéfinie étant inférieure à la fréquence d'un courant de traction dans la caténaire (2),
le critère prédéfini impliquant que les valeurs de la composante de courant dépassent un seuil de détection prédéfini.

10. Dispositif selon la revendication 8 ou 9, **caractérisé en ce qu'**il comprend:
- un dispositif de protection conçu pour déclencher et/ou exécuter une mesure de protection lorsque l'abaissement (6) a été détecté.

11. Dispositif selon l'une quelconque des revendications 8 à 10, **caractérisé en ce qu'**il comprend un filtre passe-bas (34).

12. Véhicule (1), en particulier véhicule ferroviaire, avec un dispositif selon l'une quelconque des revendications 8 à 11.
